# EUROPEAN PATENT SPECIFICATION

(11) **EP 2 391 853 B1**
(45) Date of publication and mention of the grant of the patent: **11.09.2019**
(21) Application number: 10701156.1
(22) Date of filing: 04.01.2010
(51) Int. Cl.: F24F 12/00, F28D 7/16

(54) **HEAT EXCHANGER MODULE**
WÄRMEAUSTAUSCHMODUL
MODULE D'ÉCHANGE DE CHALEUR

(30) Priority: 02.01.2009 GB 0900009
(43) Date of publication of application: 07.12.2011
(73) Proprietor: Envirovent Limited, Hornbeam Business Park Harrogate HG2 8PA (GB)
(72) Inventor: MASSEY, Michael, Lancashire PR6 7HE (GB)
(74) Representative: HGF Limited
(86) International application number: PCT/GB2010/050003
(87) International publication number: WO 2010/076574

(56) References cited:
- EP-A2- 1 249 669
- WO-A1-91/08425
- DE-A1- 19 911 177
- DE-U1- 20 115 688
- GB-A- 620 292
- JP-A- 57 035 297
- US-A1- 2002 162 651
- US-A1- 2008 173 433

## Description

### FIELD OF THE INVENTION

The present invention relates to ventilation devices for a building, as defined in the preamble of claim 1, and as illustrated in WO 91/08425.

### BACKGROUND

It is known to use a heat exchanger for recovering heat from air being extracted from a building. Due to their size, known heat exchange devices are typically installed above a ceiling such as in a loft space and connected to respective environments between which air is to be moved. For example, an extraction inlet of a heat exchanger may be coupled to a room of a building and the extraction outlet arranged to reject air from the room to an outside environment. Similarly, a ventilation inlet of the heat exchanger may be arranged to draw air from the outside environment through the heat exchanger and to supply the air to the room of the building thereby replacing air being extracted from the room.

It is desirable to provide a heat exchanger of increased efficiency and more compact size.

WO 91/08425 discloses a ventilator with heat exchanger for heat recovering, in particular for recovering of heat from a flowing medium, such as a gaseous flowing medium, and transferring this heat to another colder flowing medium, such as a gaseous flowing medium. The heat recovering ventilator comprises a heat exchanger for the exchanging of heat between two flowing media, whereby the exit for the first flowing medium from the heat exchanger is arranged neighbouring, preferably coaxially, to its entrance for the second in opposite direction flowing medium, whereby the flowing media in the said, preferably coaxial, arrangement are led through a ventilator comprising an on a common shaft and with a, preferably co-rotating, partition provided double rotor, whereby these two thus separated rotors each drives one of the two flowing media through the heat recovering ventilator.

JP 57 035297 discloses a method to prevent damage to or breakage of a heat transmitting pipe caused by a buckling, wherein a fixing position of each of the heat transmitting pipes in respect to the upper pipe plate and another fixing position in respect to the lower pipe plate are displaced in their circumferential direction in a specified angle.

GB 620292 discloses an air heater for vehicles, cabins or aircraft in which tubes extending between axially aligned headers and each wound with radially projecting loops are mounted within a casing through which air is drawn or blown substantially parallel to the tubes. The tubes may be straight or helical. The casing has outwardly flared ends and a central cylindrical part which has supplementary plates filling the spaces between the tubes and casing. Alternatively, the casing may be cylindrical throughout.

### STATEMENT OF THE INVENTION

In a first aspect of the present invention there is provided a ventilation device for a building as defined in claim 1 of the appended claims.

The use of a plurality of tubular elements has the advantage that it enables a relatively high surface area to volume ratio to be established relative to alternative constructions in which flat plate elements are provided in a spaced apart relationship. This allows a size of a given heat exchange module to be reduced.

Furthermore, embodiments of the invention are suitable for mass production at a size that is small enough to allow heat exchange modules to be installed in a cavity wall of a building structure such as an apartment block or house. This is at least in part due to the fact that heat exchange modules according to embodiments of the invention are found to be highly efficient in facilitating exchange of heat between respective fluids flowing through the modules.

For the avoidance of doubt it is noted that in some embodiments fluid flowing through the device between the first fluid inlet and first fluid outlet is in fluid isolation from fluid flowing through the device between the second fluid inlet and second fluid outlet.

Preferably the plurality of tubular elements are provided in a mutually spaced apart relationship.

More preferably the plurality of tubular elements are arranged to be substantially parallel to one another.

The plurality of tubular elements are provided within a conduit.

The conduit is arranged to provide a flowpath for fluid flowing from the second inlet to the second outlet.

The conduit may comprise a tubular member.

A pair of seal elements are preferably provided at spaced apart locations of the conduit, the seal elements being arranged to provide a seal between a wall of the conduit and a wall of each of the tube elements thereby to define a closed volume through which a fluid may flow between the second inlet and the second outlet.

Each of the pair of seal elements may be provided by a plate element, the tubular elements being arranged to pass through apertures provided in the plate element.

Preferably the second fluid inlet and the second fluid outlet are provided by respective apertures provided in the conduit, the apertures being provided at spaced apart locations with respect to one another.

The inlet and outlet apertures are preferably provided through the conduit at locations of the conduit between the seal elements.

Preferably the tube elements have a cross-sectional shape being one selected from amongst elliptical, square, rectangular, star shaped, serrated, toothed and lobed.

The second fluid inlet and the second fluid outlet may be provided by respective apertures provided in the conduit, the apertures being provided at spaced apart locations with respect to one another.

The inlet and outlet apertures may be provided at locations between the seal elements.

The module may be arranged to establish a substantially laminar flow of fluid between the first inlet and first outlet.

Alternatively the module may be arranged to establish a substantially turbulent flow between the first inlet and first outlet.

The module may be arranged to establish a substantially laminar flow of fluid between the second inlet and second outlet.

Alternatively the module may be arranged to establish a substantially turbulent flow of fluid between the second inlet and second outlet.

The plate elements may be rotated with respect to one another relative to an orientation in which the tube elements pass therebetween in substantially straight lines, whereby the tube elements describe said helical path.

The module may comprise first and second fans, the first fan being arranged to cause a flow of air from the first inlet to the first outlet, the second fan being arranged to cause a flow of air from the second inlet to the second outlet.

The second fan may comprise a centrifugal fan.

The second fan may comprise one selected from amongst a backward curved centrifugal fan and a forward curved centrifugal fan.

The first fan may comprise an axial fan.

The first and second fans may be provided at one end of the module.

The first and second fans may be driven by a single motor.

The first and second fan may be coupled to one another whereby rotation of one fan causes rotation of the other fan.

The first and second fans may be integrally formed.

The first and second fans may be arranged to rotate about a common axis.

Preferably the second fan comprises a centrifugal fan and the first fan comprises an axial fan, the second fan being arranged to project from around a circumference of the first fan.

The module may comprise a non-return device arranged to at least partially restrict a flow of air into the module via a fluid outlet of the module.

This has the advantage that a backdraft of air from one environment to another against a flow of air provided by a fan unit or other air moving device may be prevented or at least substantially reduced.

The non-return device may comprise at least one flap member arranged to pivot about an axis between a closed configuration in which the flap member at least partially restricts a flow of air into the module via said fluid outlet and an open configuration in which the at least one flap member allows a flow of air out of the module via said fluid outlet.

The non-return device may be provided with biasing means arranged to bias the at least one flap member to the closed configuration.

Alternatively the non-return device may be provided with biasing means arranged to bias the at least one flap member to the open configuration.

Embodiments of the invention may be understood by reference to the following drawings in which:
FIGURE 1 shows a side view with partial cutaway of a heat exchange module not according to the invention;
FIGURE 2 shows a cross-sectional view of the module of FIG. 1 as viewed along a direction parallel to a direction of flow of air through tubular elements of the module;
FIGURE 3 shows a cross-sectional view of a plate element of a module showing a manner in which the plate element is coupled to a body and a tubular element of the module;
FIGURE 4 shows a cross-sectional view of a tube element having a serrated cross-sectional profile;
FIGURE 5 shows a cross-sectional view of a module not according to the invention as viewed along a direction parallel to a direction of flow of air through tubular elements of the module;
FIGURE 6 shows a side view of a portion of a module showing a non-return (anti-backdraft) device;
FIGURE 7 shows a cross-sectional view of a heat exchange module installed in a cavity wall of a building;
FIGURE 8 shows a portion of a heat exchange module according to an embodiment of the invention showing a tube element coupled to a plate element in (a) perspective view and (b) cross-sectional view;
FIGURE 9 shows (a) a cross-sectional view and (b) a front elevation of a heat exchange module according to an embodiment of the invention;
FIGURE 10 shows an exploded view of the heat exchange module of FIG. 9; and
FIGURE 11 shows (a) a perspective view, (b) a side elevation, (c) a front elevation and (d) a rear elevation view of a portion of a heat exchange module according to an embodiment of the invention.

### DETAILED DESCRIPTION

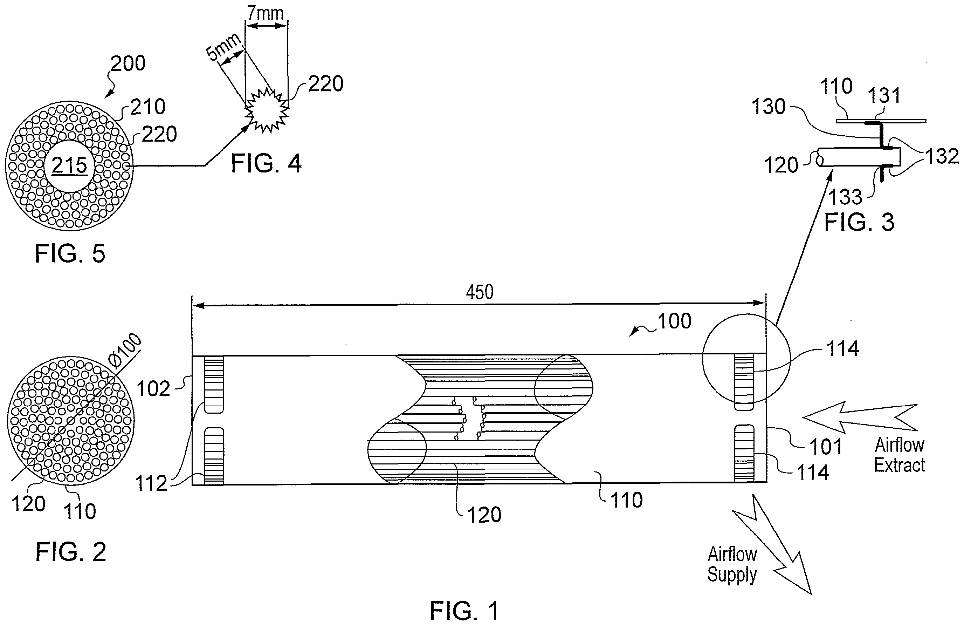

FIG. 1 shows a heat exchange module 100. The module 100 has a body 110 in the form of a substantially straight tubular conduit. Other shapes such as curved tubular conduits are also useful.

Tube elements 120 are provided within the body 110 and are arranged to run from an extraction inlet end 101 of the body 110 to an extraction outlet end 102 at an opposite end of the body 110. In FIG. 1 the tube elements 120 are straight and lie substantially parallel to a longitudinal axis of the body 110.

The tube elements 120 are supported in the body 110 by means of a pair of plate elements 130 (FIG. 3) provided proximate substantially opposite ends of the body 110. Other locations are also useful. Other numbers of plate elements 130 are also useful.

The tube elements 120 are arranged to pass through apertures 133 provided in the plate elements 130. The tube elements 120 may be fixed to the plate elements 130 by means of an adhesive. The adhesive may be arranged to provide a fluid tight seal between the tube element 120 and the plate elements 130.

In FIG. 1 the plate elements 130 have an external shape corresponding to an internal cross-sectional shape of the body 110 whereby a fluid-tight seal can be conveniently formed between the body 110 and a given plate element 130. Alternative arrangements are also useful.

A separate seal can be provided between the plate element 130 and the body 110 and/or tube elements 120. The seal may be formed from an elastomeric material, an adhesive, or any other suitable material.

It can be seen from FIG. 3 that the plate elements 130 are provided with a lipped portion 131 around a circumferential edge of the plate elements 130. The lipped portion 131 provides a "tab" member that is useful in facilitating joining of the plate elements 130 to the body 110.

A further lipped portion 132 may be provided alternatively or in addition around each of the tube element apertures 133 to facilitate joining of the tube elements 120 to the plate element 130.

Fluid inlet and outlet apertures 112, 114 respectively are provided through the body 110 at or proximate respective opposed ends of the body 110, at locations between the plate elements 130.

In FIG. 1 a pair of inlet apertures 112 and a pair of outlet apertures 114 are provided, the apertures being in the form of substantially circumferential cut-outs provided in the body 110. The provision of circumferential cut-outs allows a path length of fluid flowing through the body 110 from the inlet apertures 112 to the outlet apertures 114 to be increased relative to substantially longitudinal cut-outs.

By the term circumferential cut-outs is meant cut-outs arranged along at least a portion of a circumference of the body 110. Alternatively or in addition a single cut-out may be provided having a longitudinal axis along at least a portion of a circumference of the body 110.

By longitudinal cut-outs is meant cut-outs arranged along at least a portion of a longitudinal direction of the body 110. Alternatively or in addition an elongate cut-out may be provided having a longitudinal axis substantially parallel to a longitudinal direction of the body 110.

FIG. 2 shows a cross-sectional view of a module 100 in which tube elements 120 are arranged in substantially concentric rings as viewed along a longitudinal axis of the module 100.

In FIGS. 1 to 3 the tube elements 120 are of substantially circular cross-section. Other cross-sectional shapes are also useful. For example, FIG. 4 shows a tube element 120 having a serrated profile in cross-section. Such a profile has the advantage that a surface area of the tube element 120 may be increased for a given average tube element diameter compared with a tube element 120 having a circular cross-section of the same average diameter.

The heat exchange module 100 may be arranged whereby air from an interior of a building is extracted from the building through the tube elements 120 whilst air is drawn into the building through the inlet and outlet apertures 112, 114 of the body 110. It is to be understood that a reverse arrangement may be employed in which air from the interior of the building is extracted through apertures 112, 114 of the body 110 whilst air is drawn into the building through the tube elements 120.

The tube elements 120 are formed from a material allowing heat flow therethrough in a relatively rapid manner. The tube elements 120 may be formed from at least one selected from amongst a thin plastics material, a metallic material such as copper or any other suitable material having a sufficiently high thermal conductivity.

The tube elements 120 may be formed from polypropylene (PP). The tube elements may have a wall thickness of from around 0.1mm to around 0.25mm. Other materials are also useful. Other wall thicknesses are also useful.

The tube element 120 may have a diameter in the range of from about 5mm to about 10mm, preferably around 6mm. The diameter of the tube element 120 may be around 6mm, the length of the tube element 120 may be around 365 mm and around 120 tube elements 120 may be provided in the body 100. Other dimensions are also useful. Other numbers of tube elements 120 are also useful.

FIG. 5 shows an arrangement in which an axial region 215 of a heat exchange module 200 is not provided with tube elements 220. This construction allows placement of a non-return (or 'anti-backdraft') device axially of the body 200.

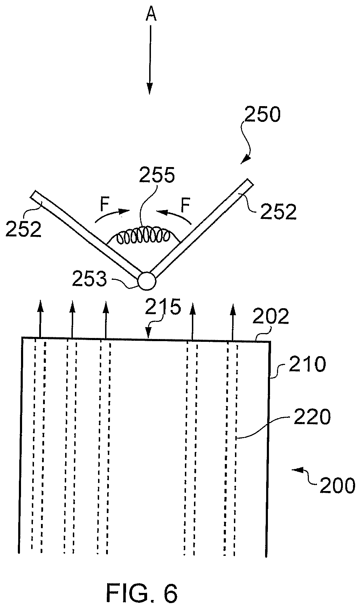

FIG. 6 shows the heat exchange module 200 of FIG. 5 having a non-return device 250 provided at an extraction outlet end 202 of the module 200.

The non-return device 250 has a pair of flap members 252 hingedly coupled to one another about a hinge axis 253. A biasing element 255 is arranged to bias respective flap members 252 in the direction of respective arrows F to an open condition in which a flow of air out from the outlet end 202 of the module 200 is permitted. Thus, in the embodiment of FIG. 6 the biasing element 255 is arranged to cause a force F to be exerted on each flap member 252 to draw the flap members 252 towards one another.

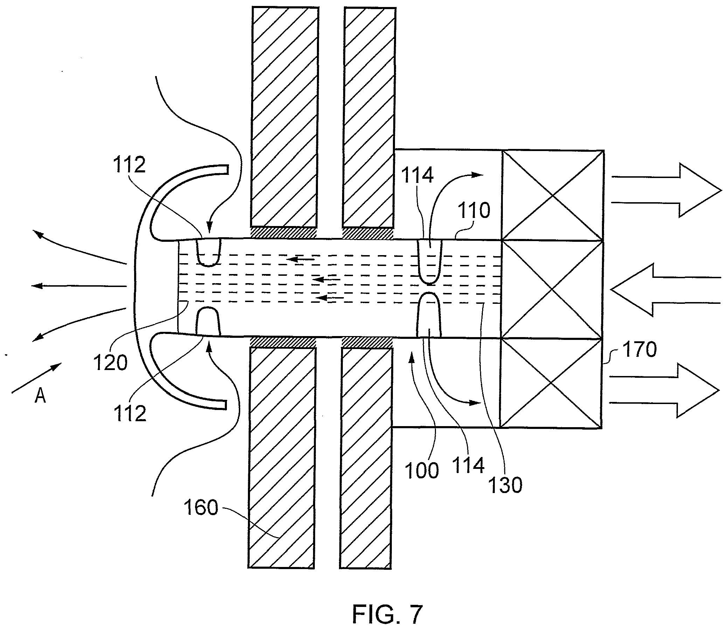

In the event that a flow of air towards the outlet end 202 of the module 200 from the outside environment (in the direction of arrow A, FIG. 6 and FIG. 7) is sufficient to overcome the biasing action of the biasing element 255 the flap members 252 are arranged to rotate in opposite directions away from one another to a closed condition in which an amount of air that can flow into the outlet end 202 of the device 200 from the outside environment is limited or in some embodiments at least substantially prevented.

In an alternative embodiment a non-return device is provided in which the biasing element 255 is arranged to bias the device to a closed condition in which flap members 252 substantially prevent air from flowing into the outlet 202 from the outside environment, rather than an open configuration as in the embodiment described above and shown in FIG. 6.

In such embodiments, the biasing force is arranged to be sufficiently low to allow a flow of air out from the outlet 202 in the absence of a sufficiently large flow of air impinging on the flap members 252 from the direction of arrow A.

In some embodiments the heat exchange module is arranged to be installed in a wall of a building such as in an exterior wall of the building.

In FIG. 7 the heat exchange module 100 is shown installed in an aperture formed through an exterior cavity wall 160 of a building. A fan unit 170 is provided, the fan unit 170 being arranged to draw air from an interior environment of the building through the tube elements 130 of the module 100 and to exhaust the air to an outside environment.

The fan unit 170 is also arranged to draw air from the outside environment through the inlet apertures 112 of the module 100 and out from the module 100 via the outlet apertures 114 to the interior environment of the building.

The module 100 is arranged to promote an exchange of heat between air flowing into the building and air flowing out from the building. Thus, in the event that air in the interior environment is hotter than air in the outside environment, e.g. during winter months in the northern hemisphere, air being drawn into the internal environment will be heated by air flowing out from the building, thus reducing a net heat loss from the building due to the process of ventilation.

The fan unit 170 may be provided on an exterior side of a wall of a building rather than the interior side as shown in FIG. 7.

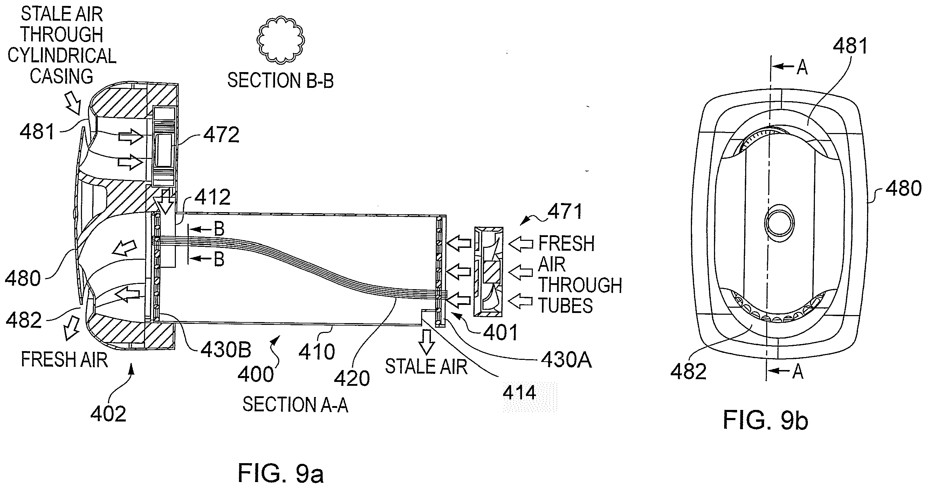

In some embodiments such as the embodiment of FIG. 9 (see below) a first fan unit is arranged to draw air from the building, and a second fan unit is arranged to draw air into the building. In some embodiments the first and second fans are provided at or proximate the same end of the module 100.

In some alternative embodiments the first and second fans are provided at or proximate opposite ends of the module 100. Thus in some embodiments the first fan unit is at the first end 101 of the module and the second fan unit is at the second end 102 of the module whilst in some alternative embodiments the first fan unit is at the second end 102 of the module 100 and the second fan unit is at the first end 101 of the module 100.

In some embodiments elements are provided within the body 110 arranged to induce turbulent flow of fluid between the second fluid inlet 112 and the second fluid outlet 114.

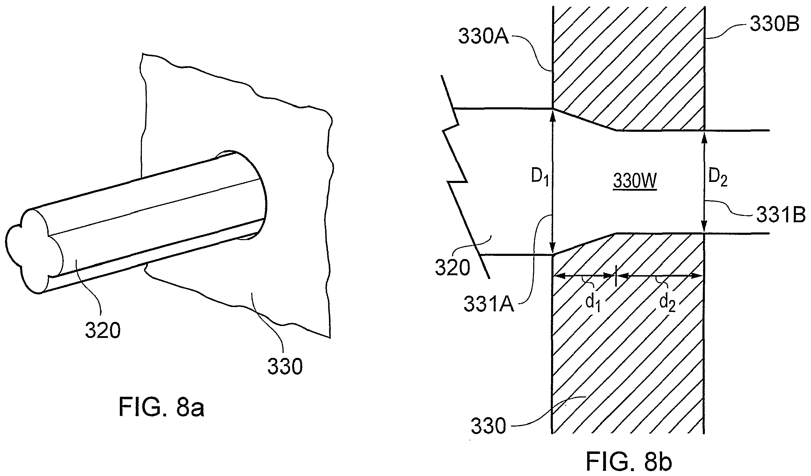

FIG. 8 shows an embodiment of the invention in which a tube element 320 is provided that is arranged to pass through a plate element 330 and to project from opposite sides of the plate element 330.

The portion of the tube element 320 projecting from a first side 330A of the plate element 330, the first side 330A facing a plate element 320 at an opposite end of a module of which the tube element 320 is part, has a cross-sectional shape having four substantially semi-circular lobes. The portion of the tube element 320 projecting from a second side 330B of the plate element 330 being a side 330B opposite the first side 330A has a substantially circular cross-sectional shape. Thus, the portion of the tube element 320 between the opposed sides 330A, 330B of the plate element 330 is arranged to undergo a transition in cross-sectional shape from one having four substantially semi-circular lobes to a substantially circular shape.

The plate element 330 has a hole formed therethrough defined by a wall 330W and apertures 331A, 331B formed in opposed sides 330A, 330B of the plate element 330. The apertures 331A, 331B are of diameter D1 and D2, respectively where D1 is greater than D2. In the embodiment shown both apertures 331A and 331B are of substantially circular cross-section although other shapes of the apertures are also useful.

Furthermore in the embodiment shown the hole defined by the wall 330W running through the plate element 330 between the apertures 331A, 331B is arranged to decrease in diameter as a function of distance from the aperture 331A to a diameter D2 over a distance d1 and then to remain of diameter D2 a distance d2 where (d1 + d2) corresponds to a thickness of the plate element 330.

The shape of the hole formed in the plate element 330 is arranged to facilitate assembly of a heat exchanger according to an embodiment of the invention such that a substantially gas tight seal between the plate element 330 and tube element 320 may be obtained.

Furthermore, in embodiments in which a substantially non-circular tube element 320 is used, it is found to be easier to insert the tube element 320 into a substantially circular aperture than into an aperture having a shape corresponding to that of the tube element, especially where a plurality of tube elements 320 are to be inserted into a plate element 330.

Thus, in the case of a tube element 320 having a cross-sectional shape having four substantially semi-circular lobes as shown in FIG. 8, it is to be understood that in some embodiments it is easier to insert the tube element into a circular aperture having a diameter equal to or greater than a largest diameter of the tube element 320 than to insert the tube element 320 into an aperture having a shape and size corresponding to that of the tube element 320.

As described above, a hole is provided through the plate element 330 that tapers from a diameter D1 to a diameter D2 as a function of distance from a first side 330A of the plate element, where D1 is greater than D2. It is to be understood that the tube element 320 may be inserted into aperture 331A on the first side 330A and forced through the hole and out from the plate element 330 through aperture 331B on the second side 330B of the plate element. The plate element 330 and tube element 320 may be arranged such that as this action is performed, a cross-sectional shape of the tube element 320 is changed such that it corresponds substantially to that of the aperture 331B on the second side 330B of the plate element 330 at the point at which the tube element 320 emerges from the second side 330B of the plate element 330. Thus, a substantially gas tight interface between the plate element 330 and tube element 320 may be obtained in a convenient manner.

In some embodiments, assembly of a heat exchange module is arranged such that heating of the tube element occurs due to friction as the tube element is passed through the aperture 331A thereby facilitating deformation of the tube element 320.

Embodiments of the invention have the advantage that a time required to assemble a heat exchange module may be reduced.

FIG. 9(a) shows an embodiment of a heat exchange module 400 in which respective opposed plate elements 430A, 430B are rotated with respect to one another such that a generally helical twist is introduced into tube elements 420 running therebetween. In the embodiment shown the tube elements 420 twist through an angle of substantially 45°.

This feature has the advantage that swirl is introduced into a flow of air passing through the module 400 over an outer surface of the tube elements 420. This reduces a likelihood of 'dead spots' or 'cold spots' being established in the module 400, being areas of relatively low air movement and therefore relatively low thermal transfer between respective air streams passing through the module 400. Thus this feature enhances an efficiency with which heat may be transferred between gases flowing through the tube elements 420 and gases flowing over an outer surface of the tube elements 420.

It is to be understood that in some embodiments an amount (angle) of twist of opposed plate elements 430A, 430B with respect to one another is arranged not to be sufficiently high to allow physical contact between respective tube elements 420. Furthermore, in some embodiments the amount of twist is small enough to allow a sufficient gap between tube elements 420 not to overly restrict a flow of air over the tube elements 420.

Furthermore, the embodiment of FIG. 9(a) is provided with first and second fan units 471, 472. The first fan unit 471 is arranged to blow air through the tube elements 420. The second fan unit 472 is arranged to blow air through a body 410 of the module 400 over the tube elements 420 from an inlet aperture 412 to an outlet aperture 414 of the body 410.

In the embodiment shown the second fan unit 472 is a centrifugal fan unit. The use of a centrifugal fan unit is found to have the benefit of further enhancing swirl of air passing from the inlet aperture 412 to the outlet aperture 414. Enhancement of swirl through use of a centrifugal fan unit is found to be useful in embodiments with or without the feature of twist of the tube elements 420.

In the embodiment shown in FIG. 9(a) the first fan unit 471 is arranged to draw fresh air from an external environment of a building into the tube elements 420 and to supply the fresh air to an interior environment of the building.

The second fan unit 472 is arranged to draw stale air from the interior environment of the building and to exhaust the stale air to the external environment.

FIG. 9(b) shows a front elevation of an air handling casing 480 of a module 400, the casing 480 being arranged to be mounted to an interior wall of a building to which air is supplied and from which air is extracted by the module 400.

The casing 480 has an inlet aperture 481 through which air may be drawn by the second fan unit 472 and an outlet aperture 482 through which air may be forced by the first fan unit 471. The casing 480 is arranged to reduce a risk that air forced through the outlet aperture 482 is immediately drawn through the inlet aperture 481. Thus, the inlet aperture 481 is arranged to draw air through the inlet aperture 481 from a direction that is rotated from the direction in which air is forced through the outlet aperture 482 by at least 90°. Other angles are also useful. Other arrangements are also useful.

It is to be understood that in some embodiments the heat exchanger 400 is arranged whereby fresh air from an external environment is forced over an outside of the tube elements 420 whilst stale air from an interior of a building is forced through the tube elements 420.

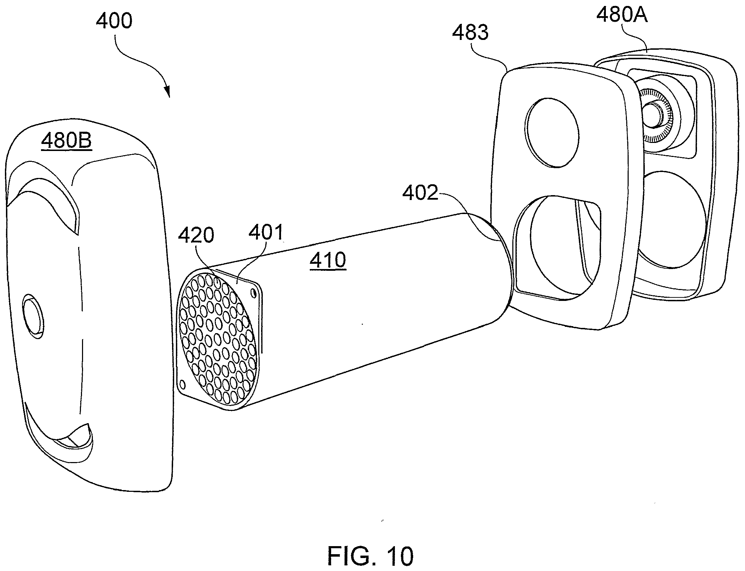

FIG. 10 shows an exploded view of the modular heat exchanger 400 of FIG. 9 in which an interior air handling casing 480A is provided at the second end 402 of the body 410 and an exterior air handling casing 480B is provided at the first end 401. In the embodiment shown the interior casing 480A corresponds to the casing 480 shown in FIG. 9(a) and (b). A panel 483 is provided at each end of the body 410 to support the body 410 and absorb acoustic vibration due to the fan units 471, 472 and air flow through the module 400.

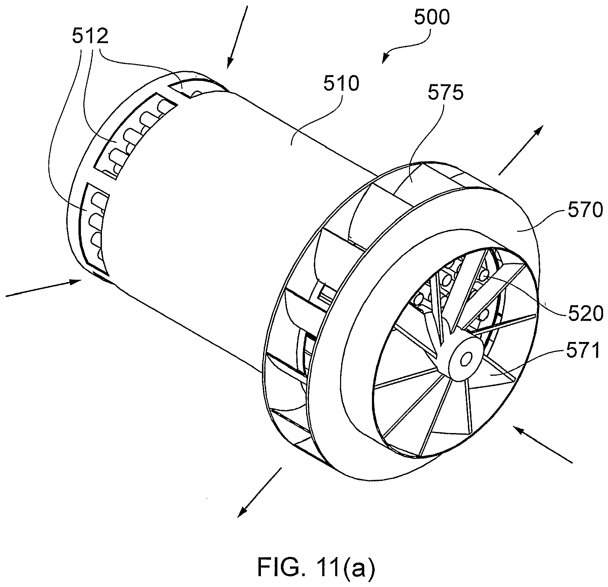

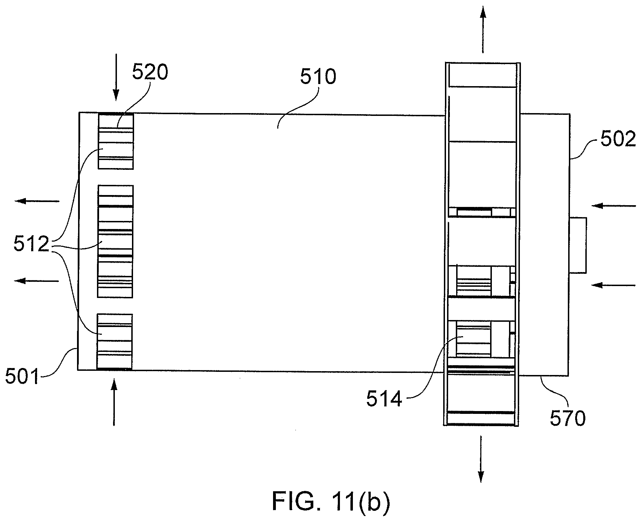

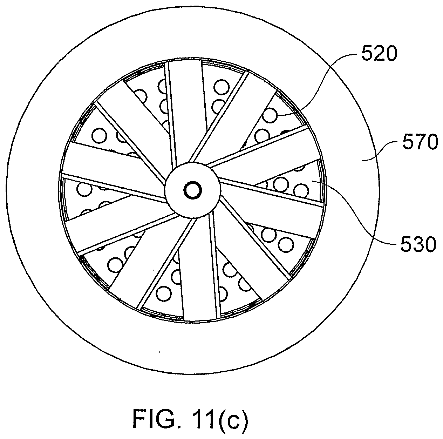

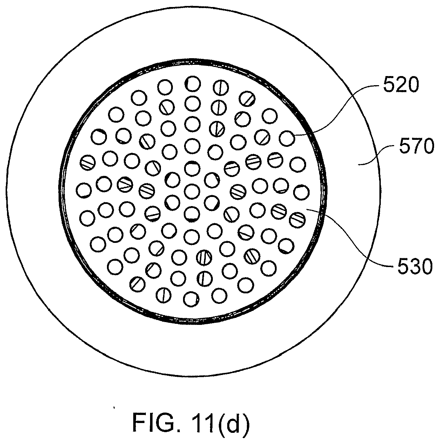

FIG. 11 shows an embodiment in which a modular heat exchanger 500 is provided with a fan module 570 at a second end 502 of the heat exchanger 500 opposite a first end 502. The fan module 570 has an axial fan member 571 and a centrifugal fan member 575. The fan members 571, 575 are coaxial and coupled to one another whereby rotation of one member causes rotation of the other member. The members 571, 575 are arranged to rotate about an axis coincident with a cylinder axis of the body 510.

The axial fan member 571 is arranged to force air into the tube elements 520 at the second end 502 of the heat exchanger 500 and to draw air out from the body 510 of the heat exchanger through apertures 514 in the body portion at the second end 502 of the heat exchanger 500. As air is drawn out from the apertures 514 air is drawn into the body 510 through apertures 512 at the first end 501 of the heat exchanger 500,

Thus a flow of air is generated over an outer surface of the tube elements 520 whereby heat transfer may be effected between this flow of air and a flow of air through the tube elements 520.

The apertures 512, 514 at respective ends of the body 510 are formed around substantially the entire circumference of the body portion 510 to reduce a resistance to flow of air along the flowpath through the heat exchanger 500.

In some embodiments the centrifugal fan member 575 is backward curved fan. A backward curved fan has the advantage that a longer flowpath is provided over the blades thereby providing a longer dwell time and better flow characteristics compared with a non backward or forward curved fan.

Thus it is to be understood that a backward curved fan may be used to draw air out from the body 510 whilst an axial fan may be arranged to force air into the tube elements 520.

In some embodiments a forward curved fan may be used to force air into the body 510 and an axial fan used to draw air out from the tube elements 520.

Other arrangements are also useful.

It is to be understood that a single motor may be used to rotate both fan members 571, 575. In some embodiments two or more motors are used. In embodiments in which the fan members 571, 575 are coupled together, the members 571, 575 may be integrally formed, for example from a single moulding. It is to be understood that in embodiments in which the members 571, 575 are coupled, the members 571, 575 may be arranged such that respective flows of air through the body between apertures 512 and 514 and through the tube elements 520 may be arranged to be substantially balanced regardless of a speed of rotation of the members 571, 575 since the members 571, 575 rotate at the same speed. Other arrangements are also useful.

Throughout the description and claims of this specification, the words "comprise" and "contain" and variations of the words, for example "comprising" and "comprises", means "including but not limited to", and is not intended to (and does not) exclude other components.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A ventilation device for a building, the device comprising:
i) a heat exchange module (400) having
a first fluid inlet and a first fluid outlet, the first fluid inlet and first fluid outlet being provided in fluid communication with one another by means of a plurality of tube elements (420) of the module (400); and
a second fluid inlet (412) and a second fluid outlet (414), the second fluid inlet (412) and second fluid outlet (414) being provided in fluid communication with one another by means of a conduit (410) surrounding the plurality of tube elements (420);
wherein the module is (400) arranged whereby an outer surface of each of the plurality of tube elements (420) is exposed to fluid flowing between the second fluid inlet (412) and second fluid outlet (414) whereby heat may be exchanged between respective fluids flowing between the respective fluid inlets and fluid outlets; and
ii) first and second fans (471, 472),
the first fan (471) being arranged to cause a flow of air from the first inlet to the first outlet, the second fan (472) being arranged to cause a flow of air from the second inlet (412) to the second outlet (414);
**characterized in that**:
the tube elements (420) are arranged to describe a substantially helical path and configured to induce a swirl in fluid flowing through the module over an outer surface of the tube elements (420), thereby to reduce the occurrence of areas of low fluid movement in the module (400).

2. A device as claimed in claim 1, wherein the tube elements (420) are provided in a mutually spaced apart relationship.

3. A device as claimed in any preceding claim, wherein the tube elements (420) are substantially parallel to one another.

4. A device as claimed in any preceding claim, wherein a pair of seal elements are provided at spaced apart locations of the conduit (410), the seal elements being arranged to provide a seal between a wall of the conduit (410) and a wall of each of the tube elements (420) thereby to define a volume through which a fluid may flow between the second inlet (412) and the second outlet (414).

5. A device as claimed in claim 4, wherein each of the pair of seal elements are provided by a plate element (330, 430), the tube elements (420) being arranged to pass through apertures (331) provided in the plate element (330, 430).

6. A device as claimed in claim 5, wherein the apertures (331) are arranged to decrease in cross-sectional area from a first value to a second value as a function of distance through the plate element (330) from an inner side (330A) of the plate element (330, 430) to an outer side (330B) of the plate element (330, 430).

7. A device as claimed in claim 6, wherein the tube elements (420) are arranged to decrease in cross-sectional area as a function of position from the inner side (330A) of the plate element (330, 430) to the outer side (330B) in a corresponding manner to the apertures (331) in the plate element (330, 430).

8. A device as claimed in any preceding claim, wherein the second fan (472) comprises a centrifugal fan.

9. A device as claimed in claim 8, wherein the second fan (472) comprises a backward curved centrifugal fan or a forward curved centrifugal fan.

10. A device as claimed in any preceding claim, wherein the first and second fans (471, 472) are provided at one end of the module (400).

11. A device as claimed in any preceding claim, wherein the first and second fans (471, 472) are driven by a single motor.

12. A device as claimed in any preceding claim, wherein the first and second fans (471, 472) are integrally formed.

13. A device as claimed in any preceding claim, wherein the first and second fans (471, 472) are arranged to rotate about a common axis.

14. A device as claimed in claim 13, wherein the second fan (472) comprises a centrifugal fan and the first fan (471) comprises an axial fan, the second fan (472) being arranged to project from around a circumference of the first fan (471).

15. A device as claimed in any preceding claim, comprising a non-return device (250) arranged to at least partially restrict a flow of air into the module (400) via a fluid outlet of the module (400).

## Patentansprüche

1. Lüftungsvorrichtung für ein Gebäude, wobei die Vorrichtung folgendes umfasst:
i) ein Wärmeaustauschmodul (400), mit:
einem ersten Fluideinlass und einem ersten Fluidauslass, wobei der erste Fluideinlass und der erste Fluidauslass über eine Mehrzahl von Rohrelementen (420) des Moduls (400) in Fluidkommunikation miteinander bereitgestellt sind; und
einem zweiten Fluideinlass (412) und einem zweiten Fluidauslass (414), wobei der zweite Fluideinlass (412) und der zweite Fluidauslass (414) über eine Rohrleitung (410), welche die Mehrzahl von Rohrelementen (420) umgibt, in Fluidkommunikation miteinander bereitgestellt sind;
wobei das Modul (400) so angeordnet ist, dass eine äußere Oberfläche jedes der Mehrzahl von Rohrelementen (420) Fluid ausgesetzt ist, dass zwischen dem zweiten Fluideinlass (412) und dem zweiten Fluidauslass (414) strömt, wodurch Wärme zwischen entsprechenden Fluids ausgetauscht werden kann, die zwischen den entsprechenden Fluideinlässen und Fluidauslässen strömen; und
ii) erste und zweite Gebläse (471, 472),
wobei das erste Gebläse (471) so angeordnet ist, dass es eine Luftströmung von dem ersten Einlass zu dem ersten Auslass bewirkt, wobei das zweite Gebläse (472) so angeordnet ist, dass es eine Luftströmung von dem zweiten Einlass (412) zu dem zweiten Auslass (414) bewirkt;
**dadurch gekennzeichnet, dass**:
die Rohrelemente (420) so angeordnet sind, dass sie einen im Wesentlichen spiralförmigen Pfad beschreiben und so gestaltet sind, dass sie in dem durch das Modul strömenden Fluid eine Verwirbelung über eine äußere Oberfläche der Rohrelemente (420) induzieren, wodurch das Auftreten von Bereichen mit geringer Fluidbewegung in dem Modul (400) verringert wird.

2. Vorrichtung nach Anspruch 1, wobei die Rohrelemente (420) in einem im Wesentlichen mit Abstand zueinander angeordneten Verhältnis bereitgestellt sind.

3. Vorrichtung nach einem der vorstehenden Ansprüche, wobei die Rohrelemente (420) im Wesentlichen parallel zueinander sind.

4. Vorrichtung nach einem der vorstehenden Ansprüche, wobei ein Paar von Dichtungselementen an beabstandeten Positionen der Rohrleitung (410) bereitgestellt ist, wobei die Dichtungselemente so angeordnet sind, dass sie eine Dichtung zwischen einer Wand der Rohrleitung (410) und einer Wand jedes der Rohrelemente (420) bereitstellen, wodurch ein Volumen begrenzt wird, durch welches ein Fluid zwischen dem zweiten Einlass (412) und dem zweiten Auslass (414) strömen kann.

5. Vorrichtung nach Anspruch 4, wobei jedes Element des Paars von Dichtungselementen durch ein Plattenelement (330, 430) bereitgestellt wird, wobei die Rohrelemente (420) so angeordnet sind, dass sie durch in dem Plattenelement (330, 430) bereitgestellte Öffnungen (331) treten.

6. Vorrichtung nach Anspruch 5, wobei die Öffnungen (331) so angeordnet sind, dass ihre Querschnittsfläche als eine Funktion des Abstands durch das Plattenelement (330) von einer inneren Seite (330A) des Plattenelements (330, 430) zu einer äußeren Seite (330B) des Plattenelements (330, 430) von einem ersten Wert zu einem zweiten Wert abnimmt.

7. Vorrichtung nach Anspruch 6, wobei die Rohrelemente (420) so angeordnet sind, dass ihre Querschnittsfläche als eine Funktion der Position von der inneren Seite (330A) des Plattenelements (330, 430) zu der äußeren Seite (330B) in entsprechender Weise zu den Öffnungen (331) in dem Plattenelement (330, 430) abnimmt.

8. Vorrichtung nach einem der vorstehenden Ansprüche, wobei das zweite Gebläse (472) ein Radialgebläse umfasst.

9. Vorrichtung nach Anspruch 8, wobei das zweite Gebläse (472) ein nach hinten gekrümmtes Radialgebläse oder ein nach vorne gekrümmtes Radialgebläse umfasst.

10. Vorrichtung nach einem der vorstehenden Ansprüche, wobei das erste und das zweite Gebläse (471, 472) an einem Ende des Moduls (400) bereitgestellt sind.

11. Vorrichtung nach einem der vorstehenden Ansprüche, wobei das erste und das zweite Gebläse (471, 472) durch einen einzigen Motor angetrieben werden.

12. Vorrichtung nach einem der vorstehenden Ansprüche, wobei das erste und das zweite Gebläse (471, 472) integral ausgebildet sind.

13. Vorrichtung nach einem der vorstehenden Ansprüche, wobei das erste und das zweite Gebläse (471, 472) so angeordnet sind, dass sie sich um eine gemeinsame Achse drehen.

14. Vorrichtung nach Anspruch 13, wobei das zweite Gebläse (472) ein Radialgebläse umfasst, und wobei das erste Gebläse (471) ein Axialgebläse umfasst, wobei das zweite Gebläse (472) so angeordnet ist, dass es um einen Umfang des ersten Gebläses (471) vorsteht.

15. Vorrichtung nach einem der vorstehenden Ansprüche, die eine Rückschlagvorrichtung (250) umfasst, die so angeordnet ist, dass sie wenigstens teilweise eine Luftströmung über einen Fluidauslass des Moduls (400) in das Modul (400) beschränkt.

## Revendications

1. Dispositif de ventilation destiné à un bâtiment, le dispositif comprenant :
i) un module d'échange de chaleur (400) ayant
une première entrée de fluide et une première sortie de fluide, la première entrée de fluide et la première sortie de fluide étant disposées en communication fluidique entre elles au moyen d'une pluralité d'éléments tubes (420) du module (400) ; et
une seconde entrée de fluide (412) et une seconde sortie de fluide (414), la seconde entrée de fluide (412) et la seconde sortie de fluide (414) étant disposées en communication fluidique entre elles au moyen d'un conduit (410) entourant la pluralité d'éléments tubes (420) ;
le module (400) étant conçu de sorte qu'une surface extérieure de chacun de la pluralité d'éléments tubes (420) soit exposée à un fluide s'écoulant entre la seconde entrée de fluide (412) et la seconde sortie de fluide (414), moyennant quoi la chaleur peut être échangée entre les fluides respectifs s'écoulant entre les entrées de fluide et sorties de fluide respectives ; et
ii) des premier et second ventilateurs (471, 472),
le premier ventilateur (471) étant conçu pour provoquer un écoulement d'air de la première entrée vers la première sortie, le second ventilateur (472) étant conçu pour provoquer un écoulement d'air de la seconde entrée (412) vers la seconde sortie (414) ;
**caractérisé en ce que** :
les éléments tubes (420) sont disposés pour décrire un trajet sensiblement hélicoïdal et conçus pour induire un tourbillon dans le fluide s'écoulant à travers le module sur une surface extérieure des éléments tubes (420), de sorte à réduire l'occurrence de zones de faible mouvement du fluide dans le module (400).

2. Dispositif selon la revendication 1, les éléments tubes (420) étant disposés dans une relation mutuellement espacée.

3. Dispositif selon l'une quelconque des revendications précédentes, les éléments tubes (420) étant sensiblement parallèles entre eux.

4. Dispositif selon l'une quelconque des revendications précédentes, une paire d'éléments d'étanchéité étant disposés à des emplacements espacés du conduit (410), les éléments d'étanchéité étant conçus pour assurer une étanchéité entre une paroi du conduit (410) et une paroi de chacun des éléments tubes (420) afin de définir un volume à travers lequel un fluide peut circuler entre la seconde entrée (412) et la seconde sortie (414).

5. Dispositif selon la revendication 4, chacun de la paire d'éléments d'étanchéité étant fourni par un élément plaque (330, 430), les éléments tubes (420) étant conçus pour passer par des ouvertures (331) pratiquées dans l'élément plaque (330, 430).

6. Dispositif selon la revendication 5, les ouvertures (331) étant conçues de sorte à diminuer en section transversale d'une première valeur à une seconde valeur en fonction de la distance à travers l'élément plaque (330) depuis un côté intérieur (330A) de l'élément plaque (330, 430) vers un côté extérieur (330B) de l'élément plaque (330, 430).

7. Dispositif selon la revendication 6, les éléments tubes (420) étant disposés de sorte à diminuer en section transversale en fonction de leur position entre le côté intérieur (330A) de l'élément plaque (330, 430) et le côté extérieur (330B) d'une manière correspondant aux ouvertures (331) dans l'élément plaque (330, 430).

8. Dispositif selon l'une quelconque des revendications précédentes, le second ventilateur (472) comprenant un ventilateur centrifuge.

9. Dispositif selon la revendication 8, le second ventilateur (472) comprenant un ventilateur centrifuge courbé vers l'arrière ou un ventilateur centrifuge courbé vers l'avant.

10. Dispositif selon l'une quelconque des revendications précédentes, les premier et second ventilateurs (471, 472) étant disposés à une extrémité du module (400).

11. Dispositif selon l'une quelconque des revendications précédentes, les premier et second composants (471, 472) étant entraînés par un moteur unique.

12. Dispositif selon l'une quelconque des revendications précédentes, les premier et second composants (471, 472) étant formés d'un seul tenant.

13. Dispositif selon l'une quelconque des revendications précédentes, les premier et second ventilateurs (471, 472) étant conçus pour tourner autour d'un axe commun.

14. Dispositif selon la revendication 13, le second ventilateur (472) comprenant un ventilateur centrifuge et le premier ventilateur (471) comprenant un ventilateur axial, le second ventilateur (472) étant conçu pour faire saillie d'une circonférence du premier ventilateur (471).

15. Dispositif selon l'une quelconque des revendications précédentes, comprenant un dispositif anti-retour (250) conçu pour restreindre au moins partiellement un flux d'air dans le module (400) par l'intermédiaire d'une sortie de fluide du module (400).
